# EUROPÄISCHE PATENTSCHRIFT

(11) **EP 2 925 195 B1**
(45) Veröffentlichungstag und Bekanntmachung des Hinweises auf die Patenterteilung: **11.01.2017**
(21) Anmeldenummer: 13805743.5
(22) Anmeldetag: 15.11.2013
(51) Int. Cl.: A47G 21/14, A47J 47/16

(54) **ENTNAHMESICHERUNG FÜR MESSERBLÖCKE**
REMOVAL SAFEGUARD FOR KNIFE BLOCKS
SÉCURITÉ ANTI-RETRAIT POUR BLOCS DE COUTEAUX

(30) Priorität: 27.11.2012 DE 202012011342 U
(43) Veröffentlichungstag der Anmeldung: 07.10.2015
(73) Patentinhaber: NewTec GmbH, 42699 Solingen (DE)
(72) Erfinder: GÜNGÖRDÜ, Ali, 42657 Solingen (DE)
(74) Vertreter: König Szynka Tilmann von Renesse Patentanwälte Partnerschaft mbB
(86) Internationale Anmeldenummer: PCT/DE2013/000682
(87) Internationale Veröffentlichungsnummer: WO 2014/082615

(56) Entgegenhaltungen:
- GB-A- 2 466 253
- JP-A- H10 192 174
- JP-A- 2009 005 914
- JP-A- 2010 063 580
- JP-U- S4 913 250
- JP-U- S54 126 839

## Beschreibung

Die vorliegende Erfindung betrifft eine Entnahmesicherung für einen Messerblock, in den mindestens ein Messer mit einer Klinge einführbar ist.

Messerblöcke der eingangs genannten Art werden in vielen Küchen zur praktischen Aufbewahrung von diversen Messern verwendet. Hierdurch sind die Messer nicht nur ordentlich sortiert, sondern die Klingen sind auch vor Beschädigungen geschützt. Insbesondere in Haushalten mit kleinen Kindern haben sich solche Messerblöcke als nachteilig erwiesen, da die Messer auch für Kinder frei zugänglich gelagert sind, so dass solche Messerblöcke mit einer großen Verletzungsgefahr für die Kinder verbunden sind.

Eine weitere Vorrichtung zur Aufbewahrung eines Messers wird in DE 297 02 269 U1 beschrieben. Diese Vorrichtung weist eine Scheide zur Aufnahme von Messerklingen auf, wobei die Scheide durch ein Grundelement und ein gegenüber dem Grundelemente abhebbaren Deckel gebildet ist, so dass das Innere der Scheide zugänglich ist. Die Vorrichtung kann eine Verriegelungsvorrichtung aufweisen, die an dem Messergriff angreift und im Verriegelungszustand das Messer an der Aufbewahrungsvorrichtung festlegt. Hierdurch werden die Messer für Kinder weitestgehend unzugänglich gelagert.

Nachteiligerweise ist die vorgeschlagene Entnahmesicherung sehr komplex und mit vielen mechanischen Hebel- und Rastelementen ausgestaltet, die darüber hinaus leicht abbrechen.

Eine Entnahmesicherung für einen Messerblock gemäß das Oberbegriff des Anspruchs 1 wird in GB 2466253 A beschrieben.

Ausgehend von den bekannten Vorrichtungen ist es die Aufgabe der vorliegenden Erfindung, eine einfache und stabile Entnahmesicherung für einen Messerblock zu schaffen.

Diese Aufgabe wird durch die Entnahmesicherung nach Anspruch 1 gelöst. Hiernach weist die Entnahmesicherung ein Deckelteil, das mindestens eine Ausnehmung besitzt, und eine hierzu schiebbeweglich gelagerte Schablone mit mindestens einer Aussparung auf, wobei in einer ersten Position die Aussparung und die Ausnehmung derart zueinander ausgerichtet sind, dass ein Durchführen der Klinge möglich ist und in einer zweiten Position das Durchführen der Klinge blockiert ist. Diese Entnahmesicherung wird stirnseitig auf einen herkömmlichen Messerblock aufgesetzt und mit diesem lösbar oder unlösbar verbunden. Dabei sind die Ausnehmungen des Deckelteils, die Aussparungen der Schablone und die Aufnahmen des Messerblocks in einer ersten Position so zueinander ausgerichtet, dass die Messer dem Messerblock entnommen und wieder in diesen eingeführt werden können. In der zweiten Position der Schablone werden die Ausnehmungen sowie die Aufnahmen zumindest teilweise von der Schablone abgedeckt, so dass die Messer weder in den Messerblock eingeführt noch aus diesem herausgezogen werden können.

Bevorzugte Ausführungsformen der vorliegenden Erfindung werden im Folgenden in den Unteransprüchen beschrieben.

Zur Bewegung der Schablone sind unterschiedliche Mechanismen vorgesehen. Nach einer ersten bevorzugten Ausführungsform wird die Schablone durch den Magneten in der ersten Position gehalten, bei der das Messer in den Messerblock einführbar und/oder das Messer aus dem Messerblock entnehmbar ist. Wird der Magnet entfernt, wirkt der Magnet nicht mehr anziehend auf die Schablone, so dass diese aufgrund der Schwerkraft in die zweite Position fällt. Bei dieser deckt die Schablone die Ausnehmungen und/oder die Aufnahmen zumindest teilweise ab, damit die Messer aufgrund der formschlüssigen Lagerung nicht mehr entnommen werden können. Alternativ hierzu sind auch andere Möglichkeiten zur Verschiebung der Schablone vorgesehen. Beispielsweise kann die Schablone einen Mitnehmer aufweisen, der seitlich aus dem Deckelteil herausragt und per Hand geführt wird. Gegebenenfalls kann der Mitnehmer in der zweiten Position über ein Schlosselement verriegelt werden, womit ebenfalls eine Kindersicherung geschaffen ist.

Die Entnahmevorrichtung ist vorzugsweise als separates Bauteil ausgebildet, das wahlweise mit dem Messerblock verbunden wird. Hierdurch ergibt sich für den Benutzer insbesondere der Vorteil, dass die Entnahmevorrichtung entfernt werden kann, sofern auf die Kindersicherung verzichtet werden kann.

Konkrete Ausführungsformen der vorliegenden Erfindung werden im Folgenden anhand der Figuren erläutert. Es zeigen:
- Fig. 1a, b: Messerblöcke nach dem Stand der Technik,
- Fig. 2a, b: schematische Darstellungen einer Entnahmesicherung in zwei unterschiedlichen Positionen und
- Fig. 3a-d: Draufsichten auf Deckelelemente und Schablonen in unterschiedlichen Positionen.

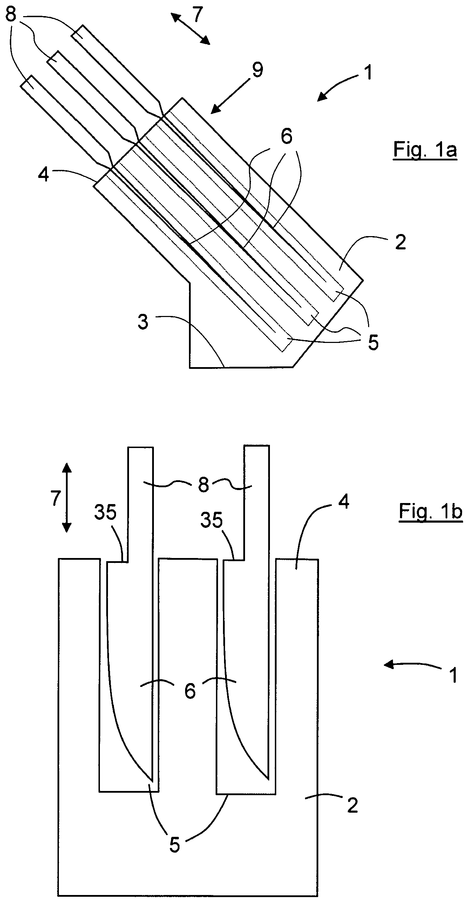

Messerblöcke 1 der bekannten Art bestehen aus einem massiven Block 2, der eine Standfläche 3 und eine Stirnfläche 4 besitzt. In die winklig angeordnete Stirnfläche 4 sind längliche Aufnahmen 5 eingebracht, die zur Aufnahme von Messerklingen 6 geeignet sind. In Pfeilrichtung 7 lassen sich die Messer 8 entnehmen und wieder in den Messerblock 1 einführen. Fig. 1b zeigt die Lage der Messer 8 in einer Frontansicht (aus Pfeilrichtung 9, Fig. 1 a).

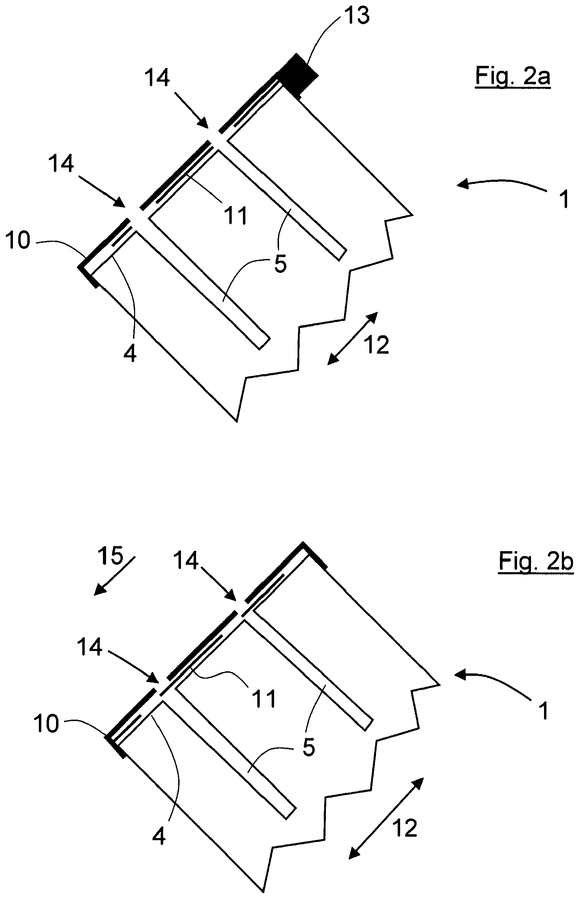

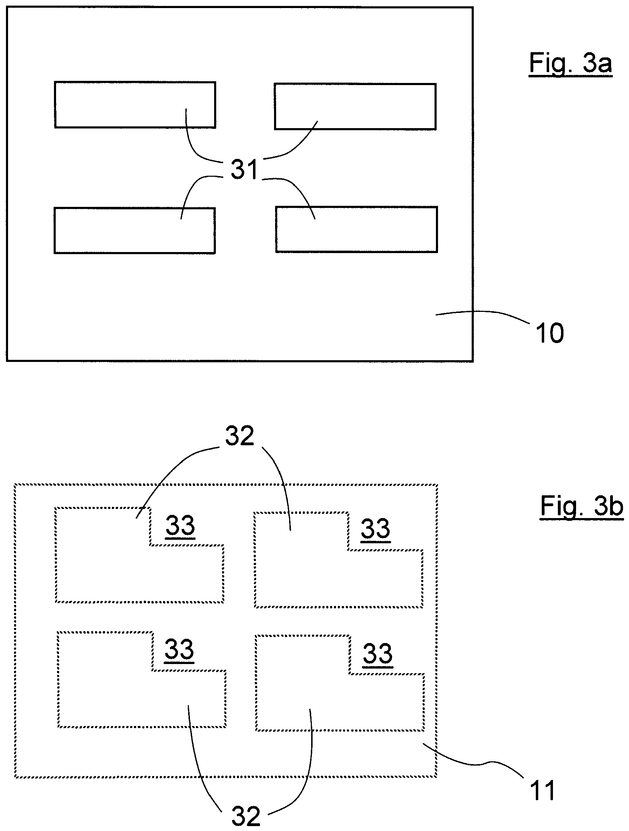

Konkrete Ausführungsformen der Erfindung werden in den Fig. 2a, b und Fig. 3a-d gezeigt. Hiernach wird als Entnahmesicherung ein Deckelteil 10 und eine Schablone 11 auf die Stirnseite 4 des Messerblocks 1 aufgesetzt, die zwischen dem Deckelteil 10 und der Stirnseite 4 des Messerblocks 1 in Pfeilrichtung 12 schiebbeweglich gelagert ist. Durch die Wirkung eines Magneten 13 (Fig. 2a) wird die ferromagnetische Schablone 11 in der ersten Position gehalten, bei der die Aufnahmen 5 komplett freiliegen, so dass die Messer 8 in Pfeilrichtung 14 eingeführt werden können.

Fig. 2b zeigt demgegenüber die zweite Position der Schablone 11, die mangels einer anziehenden Wirkung des Magneten 13 schwerkraftbedingt in Pfeilrichtung 15 rutscht. Dabei verdeckt die Schablone 11 zumindest bereichsweise die Aufnahmen 5, so dass die Messer (in Fig. 2a und 2b nicht dargestellt) nicht entnommen werden können.

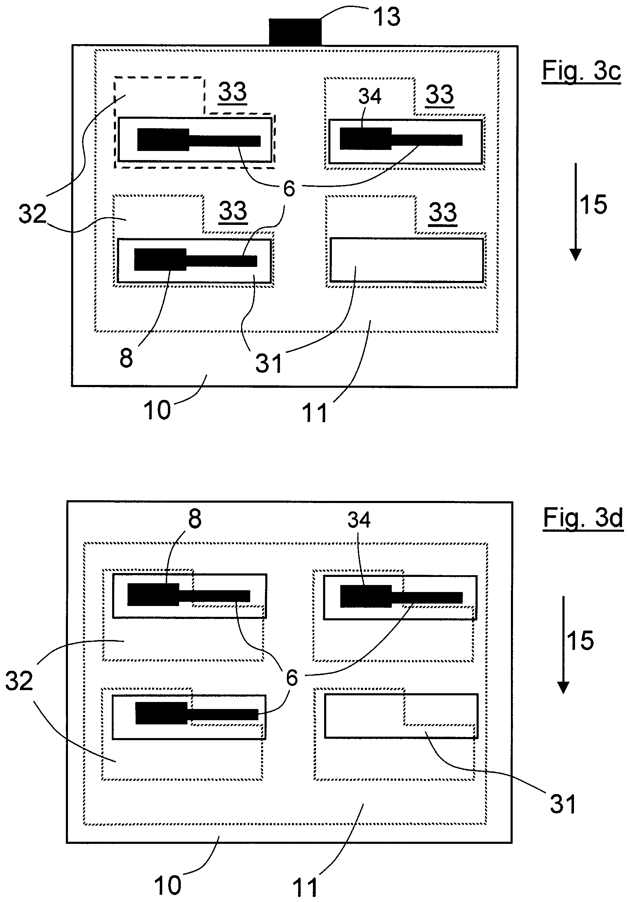

Fig. 3a zeigt eine konkrete Ausführungsform eines Deckelteils 10 mit darin eingebrachten Ausnehmungen 31, die in Übereinstimmung mit den Aufnahmen 5 im Messerblock 1 ausgebildet sind. Die Schablone 11 (Fig. 3b) weist demgegenüber L-förmige Aussparungen 32 auf, so dass jede Aussparung 32 eine Lasche 33 bildet, deren Funktion aus den Fig. 3c und 3d hervorgeht. Die Fig. 3c und 3d zeigen nämlich ein Deckelteil 10 und eine Schablone 11, wie sie hintereinander angeordnet sind. Dabei stellt Fig. 3c die erste Position dar, bei der die Aufnahmen 5 und die Ausnehmungen 31 freiliegen, damit die Messer 8 eingeführt und wieder herausgezogen werden können. Sobald der Magnet 13 entfernt wird, verschiebt sich die Schablone 11 schwerkraftbedingt in Pfeilrichtung 15 und kommt in der in Fig. 3d dargestellten zweiten Position zum Liegen. Dort verschließen die Laschen 33 zumindest bereichsweise die Ausnehmungen 31 und die Aufnahmen 5, so dass die Messer 8 formschlüssig gelagert sind und nicht entnommen werden können. Konkret schieben sich die Laschen 33 vor das rückwärtige Ende 35 der Messerklingen 6, wohingegen die Messergriffe 34 den freien Teil der Aussparungen 32 durchgreifen.

## Patentansprüche

1. Entnahmesicherung für einen Messerblock (1), in den mindestens ein Messer (8) mit einer Klinge (6) in eine Aufnahme (5) einführbar ist, umfassend ein Deckelteil (10), das mindestens eine Ausnehmung (31) besitzt, und eine hierzu schiebbeweglich gelagerte Schablone (11) mit mindestens einer Aussparung (32), wobei in einer ersten Position die Aussparung (32) und die Ausnehmung (31) derart zueinander ausgerichtet sind, dass ein Durchführen der Klinge (6) möglich ist und in einer zweiten Position das Durchführen der Klinge (6) blockiert ist, **dadurch gekennzeichnet, dass** die Schablone (11) zumindest teilweise aus ferromagnetischem Material besteht, so dass die Schablone (11) über die Wirkung eines Magneten (13) verschiebbar ist.

2. Entnahmesicherung nach Anspruch 1, **dadurch gekennzeichnet, dass** die Schablone (11) durch den Magneten (13) in der ersten Position gehalten wird, bei der das Messer (8) in den Messerblock (1) einführbar und/oder das Messer (8) aus dem Messerblock (1) entnehmbar ist.

3. Entnahmesicherung nach Anspruch 1 oder 2, **dadurch gekennzeichnet, dass** die Schablone (11) ohne die anziehende Wirkung des Magneten (13) die zweite Position annimmt, so dass das Messer (8) nicht in den Messerblock (1) einführbar ist oder aus dem Messerblock (1) entnehmbar ist.

## Claims

1. Removal safeguard for a knife block (1), into which at least one knife (8) with a blade (6) can be inserted into a slot (5), comprising a cover part (10) that has at least one opening (31), and a template (11) with at least one recess (32) slideably mounted in relation to the same, wherein the recess (32) and the opening (31) are aligned with each other in a first position in such a way that passing the blade (6) through is possible, and passing the blade (6) through is blocked in a second position, **characterised in that** the template (11) consists at least in part of a ferromagnetic material, so that the template (11) can be displaced by the effect of a magnet (13).

2. Removal safeguard according to claim 1, **characterised in that** the template (11) is held in the first position by the magnet (13), in which the knife (8) can be inserted into the knife block (1) and/or the knife (8) can be removed from the knife block (1).

3. Removal safeguard according to claim 1 or 2, **characterised in that** the template (11) takes up the second position without the attracting effect of the magnet (13), so that the knife (8) cannot be inserted into the knife block (1) or removed from the knife block (1).

## Revendications

1. Sécurité antiretrait destinée à un bloc (1) porte-couteaux dans lequel au moins un couteau (8) peut être introduit par une lame (6) dans un logement (5), comprenant une partie (10) formant couvercle, munie d'au moins un évidement (31), et un gabarit (11) qui est monté avec mobilité coulissante par rapport à ladite partie et présente au moins une découpe (32), ladite découpe (32) et ledit évidement (31) étant orientés mutuellement de façon à permettre un passage de la lame (6) en un premier emplacement, et à bloquer le passage de ladite lame (6) en un second emplacement, **caractérisée par le fait que** le gabarit (11) est constitué d'un matériau ferromagnétique, au moins en partie, de sorte que ledit gabarit (11) peut être animé de coulissements sous l'action d'un aimant (13).

2. Sécurité antiretrait selon la revendication 1, **caractérisée par le fait que** le gabarit (11) est retenu, par l'aimant (13), au premier emplacement auquel le couteau (8) peut être introduit dans le bloc (1) porte-couteaux et/ou ledit couteau (8) peut être extrait dudit bloc (1) porte-couteaux.

3. Sécurité antiretrait selon la revendication 1 ou 2, **caractérisée par le fait que** le gabarit (11) vient occuper le second emplacement sans l'effet d'attraction de l'aimant (13), de telle sorte que le couteau (8) ne puisse pas être introduit dans le bloc (1) porte-couteaux, ou extrait dudit bloc (1) porte-couteaux.
